# EUROPEAN PATENT SPECIFICATION

(11) **EP 0 377 530 B1**
(45) Date of publication and mention of the grant of the patent: **11.01.1995**
(21) Application number: 90400009.8
(22) Date of filing: 03.01.1990
(51) Int. Cl.: A23L 1/308, A23L 1/0534, A23L 1/10

(54) **A beta-glucane enriched alimentary fiber and process for preparing the same**
Nahrungsfaser mit einem höheren Gehalt an Beta-Glucan und Verfahren zu deren Herstellung
Fibre alimentaire enrichie en bêta-glucane et procédé pour la préparer

(30) Priority: 06.01.1989 FI 890079
(43) Date of publication of application: 11.07.1990
(73) Proprietor: ALKO LTD., 00101 Helsinki (FI)
(72) Inventor: Lehtomäki, Ilkka, SF-05200 Rajamäki (FI); Karinen, Pertti, SF-05200 Rajamäki (FI); Bergelin, Risto, SF-61330 Koskenkorva (FI); Myllymäki, Olavi, SF-02210 Espoo (FI)
(74) Representative: Ores, Irène

(56) References cited:
- EP-A- 0 251 798
- US-A- 3 788 861
- US-A- 4 175 124
- US-A- 4 341 805

## Description

The present invention is related to a process for preparing a beta-glucan enriched, cellulose-containing alimentary fiber intended for use as raw material or additive in the food industry and as food.

In known processes, beta-glucan enriched fiber is prepared by grinding the grain while dry and an by screening the fiber material from the starch component. The fiber material thus obtained typically contains beta-glucan at maximum 15 % and a considerable amount of starch. Wet grinding processes have not been used previously, because, when the grain material becomes wet, enzymes which dissolve beta-glucan are activated and destroy the beta-glucan.

US Patent 3 788 861 describes a wet-grinding process for preparing a baking flour. This process is applied to wheat which contains only minor amounts of beta-glucan and the fiber fraction is discarded. No attention is paid to the composition of this fraction and no information concerning the application of a wet-grinding process to beta-glucan rich cereals such as oats or barley, is given.

Fiber preparations devoid of beta-glucan are prepared by wet methods. Many processes are known per se for the isolation of beta-glucan. They are characterised by dissolving the beta-glucan, for example, in alkaline conditions and its reprecipitation, for example, with alcohol or acetone. The greatest problem involved in these processes is the high viscosity of the beta-glucan solution even at very low concentrations of beta-glucan. The precipitation respectively requires a large amount of solvent, which has to be recovered and reconcentrated. This makes these processes uneconomical.

It is an objective of the present invention to eliminate the disadvantages described above.

It is a specific objective of the invention to provide a process in which a fiber fraction which contains especially much beta-glucan and especially little starch can be prepared from oats or barley, a fraction which, owing to its healthful effects, its production-promoting properties in food products, and its pleasantly mild taste, is suitable for use as food and as a raw material or additive in the food industry.

A further objective of the invention is a beta-glucan containing alimentary fiber prepared according to the process.

It is further an object of the invention to provide a new type of fiber preparation, which contains a large amount of beta-glucan and little starch.

The invention is related to a process for the preparation of a cellulose-containing, beta-glucan enriched fiber, intended for use as food and as a raw material in the food industry. In the process ground or unground oats or barley is slurried rapidly in cold water, which may contain an organic solvent. Immediatly after, the slurry is homogenized rapidly and screened. A beta-glucan containing fiber is obtained from the screening.

The temperature of the slurrying water is 0-15°C, preferably 8°C. The slurrying water may contain an organic solvent, such as ethanol, 5-94 % by weight. Furthermore, the process is characterized in that the slurry is homogenized using a wet grinder and that the fiber is separated by screening.

The screening is preferably proceeded in two stages ; in the first the mesh size is under 2000µm, preferably about 800 µm and in the second it is over 40 µm, preferably about 80 µm.

The invention is also related to the beta-glucan enriched oats or barley fiber, prepared by any of the processes described above and intended for use as food or as a raw material or additive in the food industry. The beta-glucan concentration of the fiber according to the present invention is 15-40 %, but preferably 15-30 % and its starch concentration 5-30 %.

Oats or barley crops contain, especially in the seed, a large amount of beta-glucan combined with a cellulose-containing fiber material.

The invention is based on the basic idea that ground or unground oats or barley is slurried rapidly in cold water, is homogenized rapidly, and the fiber material is separated by screening. The obtained fiber material is dried rapidly by using known drying techniques. The yield can be improved even from this by using for the slurrying, for example, ethanol-containing cold water, since organic solvents have a beta-glucan precipitating effect. The use of organic solvents also enables oils and fats to be isolated from grain. The endosperm component separating in the screening may be used, for example, for the preparation of starch, ethanol and protein.

This fiber preparation is characterized by a beta-glucan content of up to more than 30 %, a very low starch content, and a thickening effect based on the beta-glucan. In foods, this preparation increases the fiber contact, decreases the energy content, and the beta-glucan present in it lowers the blood cholesterol level.

According to the invention, ground or unground oats or barley, is slurried rapidly in cold water having a temperature of 0-15°C, preferably +8°C. The dry substance content at the slurrying stage is 10-45 %, preferably 30 %. The slurry is homogenized in an effective wet grinder with as little delay as possible. The homogenized slurry is screened in two stages, the coarser hull and other such material being separated in the first stage and the actual beta-glucan fiber in the second stage. The endosperm component passes both stages. The obtained damp beta-glucan fiber is dried by some known drying method, but as rapidly as possibly.

If an organic, water-soluble solvent, preferably ethanol, at a concentration of 5-94 % suitably 10-50 %, preferably 20 %, is used for the slurrying in addition to cold water, the yield of beta-glucan in the fiber fraction rises as high as 96 %. In this case the oils and fats of the grain dissolve in the organic solvent, and they can be separated in a very pure form by removing the organic solvent by evaporation.

The invention is described below in detail with the help of some examples, the purpose of which is to further illustrate the invention.

### Example 1.

The initial material used was ground barley from which the outer covering of the seed (hull) had been screened off. The flour was slurried in +10°C water to form an approximately 30 % slurry (dry substance content) . The slurry was homogenized in a continuous-working wet grinder and screened in a two-stage rotating conical sieve ; the mesh size was 800 µm in the first screening stage and 80 µm in the second stage. Cold washing water was directed onto the screen surface of the second stage in order to enhance the separation of the endosperm component. In the obtained fine fiber fraction, the beta-glucan concentration was 18 % and the starch concentration 25 %. The beta-glucan yield, calculated from the beta-glucan of the initial materials, was approximately 75 %.

### Example 2.

The initial material used was dehulled oats. The groats were mixed with cold water and were fed directly to homogenization. The temperature of the water was + 8°C, the dry matter content in the slurrying was 20 %. The homogenized slurry was screened in a two-stage sieve, as in Example 1. in the obtained fiber fraction the beta-glucan concentration was 31 % and the starch concentration 10 %. The beta-glucan yield, calculated from the beta-glucan of the initial material, was approximately 90 %.

### Example 3.

The initial material used was ground, dehulled oats. The groats were slurried in an ethanol solution of 16 % by weight having a temperature of 12°C. The slurry was homogenized and screened as in Examples 1 and 2.

The beta-glucan concentration of the fiber fraction was 28 % and its starch concentration 12 %. The beta-glucan yield was approximately 85 %. In addition, the starch and protein were separated by centrifugation from the endosperm slurry which has passed the screening. Ethanol was evaporated out from the supernatant, whereupon the oil of the oats separated in unoxidized state to the surface.

## Claims

1. A process for the preparation of a cellulose-containing, β-glucan enriched fiber for use as food and as a raw material or additive in the food industry, characterized in that : in a first step, ground or unground oats or barley is slurried rapidly in cold water, optionnally in presence of an organic solvent, said first step being followed with as little delay as possible by a second step wherein the slurry is homogenized rapidly in a wet grinder and wherein the homogenate is screened to obtain a β-glucan containing fiber from the screening.

2. The process according to Claim 1, characterized in that the temperature of the slurrying water is 0 - 15°C.

3. The process according to any of Claims 1 or 2, characterized in that the slurrying water contains 5-94 % by weight of organic solvent.

4. The process according to Claim 3, characterized in that the slurrying water contains 20 % by weight of organic solvent.

5. The process according to any of Claims 3 or 4, characterized in that the organic solvent is ethanol.

6. The process according to any of Claims 1 to 5, characterized in that the screening is performed in two stages : in the first the mesh size is under 2000 µm, and in the second the mesh size is over 40 µm.

7. The process according to Claim 6, characterized in that in the first screening stage the mesh size is of about 800 µm and in the second stage the mesh size is about 80 µm.

8. The process according to any of Claims 1 to 7, characterized in that the homogenization of the slurry is performed in a continuously working wet grinder.

9. A β-glucan enriched fiber for use as food or as a raw material or additive in the food industry, characterized in that it is obtainable by the process according to claims 1 - 8, and in that its β-glucan concentration is 15-40 % and its starch concentration 5-30 %.

## Patentansprüche

1. Verfahren zur Herstellung einer Zellulose enthaltenden, an Beta-Glucan angereicherten Faser zur Verwendung als Lebensmittel oder als Ausgangsmaterial oder Additiv in der Lebensmittelindustrie, **dadurch gekennzeichnet,** daß in einer ersten Stufe gemahlene oder nicht gemahlene Haferflocken oder Gerste in kaltem Wasser, gegebenenfalls in Gegenwart eines organischen Lösungsmittels, rasch aufgeschlemmt werden, wobei sich an die erste Stufe mit möglichst geringer Verzögerung eine zweite Stufe anschließt, in der die Aufschlemmung rasch in einer Naßmühle homogenisiert wird und das Homogenat abgesucht wird, um eine Beta-Glucan enthaltende Faser durch das Absuchen zu erhalten.

2. Verfahren nach Anspruch 1, **dadurch gekennzeichnet,** daß die Temperatur des Aufschlemmwassers 0 - 15°C beträgt.

3. Verfahren nach einem der Ansprüche 1 oder 2, **dadurch gekennzeichnet,** daß das Aufschlemmwasser 5 - 94 Gew.% organisches Lösungsmittel enthält.

4. Verfahren nach Anspruch 3, **dadurch gekennzeichnet,** daß das Aufschlemmwasser 20 Gew.% organisches Lösungmittel enthält.

5. Verfahren nach einem der Ansprüche 3 oder 4, **dadurch gekennzeichnet,** daß das organische Lösungmittel Ethanol ist.

6. Verfahren nach einem der Ansprüche 1 bis 5, **dadurch gekennzeichnet,** daß das Absuchen in zwei Stufen durchgeführt wird: in der ersten Stufe liegt die Maschenweite unter 2000 µm, und in der zweiten Stufe liegt die Maschenweite über 40 µm.

7. Verfahren nach Anspruch 6, **dadurch gekennzeichnet,** daß in der ersten Absuchstufe die Maschenweite etwa 800 µm beträgt, und in der zweiten Stufe die Maschenweite etwa 80 µm beträgt.

8. Verfahren nach einem der Ansprüche 1 bis 7, **dadurch gekennzeichnet,** daß die Homogenisierung der Aufschlemmung in einer kontinuierlich arbeitenden Naßmühle durchgeführt wird.

9. Eine an Beta-Glucan angereicherte Faser zur Verwendung als Lebensmittel oder als Ausgangsmaterial oder Additiv in der Lebensmittelindustrie, **durch gekennzeichnet,** daß sie durch das Verfahren nach den Ansprüchen 1 bis 8 erhältlich ist, und daß ihre Beta-Glucan-Konzentration 15 - 40 % und ihre Stärkekonzentration 5 - 30 % beträgt.

## Revendications

1. Procédé pour la préparation d'une fibre contenant de la cellulose, enrichie en β-glucane, utilisable comme aliment et comme matière première ou additif dans l'industrie alimentaire, caractérisé en ce que, dans une première étape, de l'avoine ou de l'orge broyée ou non broyée est rapidement mise en bouillie dans de l'eau froide, éventuellement en présence d'un solvant organique, cette première étape étant suivie dans un délai aussi faible que possible d'une seconde étape dans laquelle la bouillie est rapidement homogénéisée dans un broyeur humide, et dans laquelle l'homogénat est tamisé pour obtenir à la suite du tamisage une fibre contenant du β-glucane.

2. Procédé suivant la revendication 1, caractérisé en ce que la température de l'eau utilisée pour la mise en bouillie est de 0 à 15°C.

3. Procédé suivant les revendications 1 ou 2, caractérisé en ce que l'eau utilisée pour la mise en bouillie contient 5 à 94% en poids de solvant organique.

4. Procédé suivant la revendication 3, caractérisé en ce que l'eau utilisée pour la mise en bouillie contient 20% en poids de solvant organique.

5. Procédé suivant l'une quelconque des revendications 3 ou 4, caractérisé en ce que le solvant organique est l'éthanol.

6. Procédé suivant l'une quelconque des revendications 1 à 5, caractérisé en ce que le tamisage est réalisé en deux étapes: dans la première la dimension des mailles du tamis est inférieure à 2000 µm et dans la seconde, la dimension des mailles est supérieure à 40 µm.

7. Procédé suivant la revendication 6, caractérisé en ce que dans la première étape de tamisage, la dimension des mailles du tamis est d'environ 800 µm et dans la seconde étape, la dimension des mailles est d'environ 80 µm.

8. Procédé suivant l'une quelconque des revendications 1 à 7, caractérisé en ce que l'homogénéisation de la bouillie est effectuée dans un broyeur humide travaillant en continu.

9. Fibre enrichie en β-glucane utilisable comme aliment ou comme matière première ou additif dans l'industrie alimentaire, caractérisée en ce qu'elle est susceptible d'être obtenue par le procédé suivant les revendications 1 à 8 et en ce que sa concentration en β-glucane est de 15 à 40% et sa concentration en amidon est de 5 à 30%.
